# EUROPEAN PATENT SPECIFICATION

(11) **EP 4 292 015 B1**
(45) Date of publication and mention of the grant of the patent: **15.10.2025**
(21) Application number: 21704495.7
(22) Date of filing: 09.02.2021
(51) Int. Cl.: G06K 19/077, G06K 19/02

(54) **AN RFID IDENTIFIER**
RFID-IDENTIFIKATOR
IDENTIFICATEUR RFID

(43) Date of publication of application: 20.12.2023
(73) Proprietor: Confidex Oy, 33800 Tampere (FI)
(72) Inventor: LAVIKKO, Petteri, 33800 Tampere (FI); AHOKAS, Heikki, 33800 Tampere (FI)
(74) Representative: Kolster Oy Ab
(86) International application number: PCT/EP2021/053026
(87) International publication number: WO 2022/171268

(56) References cited:
- WO-A1-01/04834
- WO-A1-2013/028852
- WO-A2-2008/090288
- DE-A1- 10 133 588
- FR-A1- 2 796 183
- FR-A1- 2 910 152
- US-A1- 2008 174 434

## Description

### FIELD OF THE INVENTION

The invention relates to an RFID identifier comprising a substrate having a first surface and a second surface, a coil antenna on the first surface of the substrate and an integrated circuit on a chip coupled to the coil antenna. The coil antenna has a first end of the coil antenna and a second end of the coil antenna. The first end and the second end of the coil antenna are connected by a bridge. The bridge has a first end of the bridge and a second end of the bridge. The first end of the coil antenna is coupled to the first end of the bridge and the second end of the coil antenna is coupled to the second end of the bridge. The coil antenna and the bridge are electrically isolated between the first and the second end of the bridge.

### BACKGROUND OF THE INVENTION

Contactless RFID identifiers, such as RFID smart tickets, have traditionally been manufactured as a sandwich structure. A PET substrate comprising a chip and an etched aluminum HF antenna, i.e. a loop antenna, lies between paper layers. The above-mentioned three-layer structure has been a standard structure for the recent 15 years.

The loop antenna requires a bridge that connects by a physical contact the first and the second ends of the antenna. The bridge may be located on the same side of the substrate as the antenna. The bridge extends over the antenna from the first end of the antenna to the second end of the antenna. There is an insulation layer between the bridge and the antenna in order to electrically isolate the bridge from the antenna.

Another option is that the bridge is located on the opposite side of the substrate as the antenna. The bridge extends from the first end of the antenna to the second end of the antenna on the opposite side of the substrate. The substrate forms an insulation layer that electrically isolates the bridge from the antenna.

In both above-mentioned cases, the first end of the antenna and the first end of the bridge likewise the second end of the antenna and the second end of the bridge are electrically connected by a crimp connection that forms a galvanic contact between the antenna and the bridge.

Recent trends towards a plastic-free world necessitates decreasing or dispensing with plastics, especially in consumer products. PVC is considered as a hazardous material but also other plastics, which have been considered as environmentally friendly plastics, have become undesirable materials due to possible disintegration into microplastics. Such materials include, among others, PP and PET. Therefore, transport operators would like to have alternative payment media without plastics.

One of the problems associated with the above device is that the substrate shall resist making of the crimp connection, which usually requires a plastic substrate.

WO 2008/090288 against which claim 1 is delimited discloses an antenna with a via-less bridge for a portable electronic unit. US 2008/174434 discloses a permanently destructible resonant circuit with non-self-healing capacitor. DE 10133588 discloses a semiconductor chip and a conductive structure for contactless chip cards that have a capacitive coupling between an integrated circuit and a coil antenna. WO 2013/028852 discloses systems, devices, methods, and admixtures of transponders and food products for indication of food attributes. WO 01/04834 discloses a contactless access ticket and method for making same.

### BRIEF DESCRIPTION OF THE INVENTION

An object of the present invention is to provide an RFID identifier so as to solve the above problem. The objects of the invention are achieved by an RFID identifier which is characterized by what is stated in the independent claim. The preferred embodiments of the invention are disclosed in the dependent claims.

The invention is based on an idea of using an environmentally friendly substrate. The use of the environmentally friendly substrate necessitates replacing the crimp connection by a more suitable connection.

An advantage of the present RFID identifier is that the RFID identifier does not include or includes only a minor amount of conventional plastic material.

Another advantage is that the complex manufacturing method of the bridge according to the prior art can be avoided.

Still another advantage is that it is possible to use two-layer structures instead of the above-mentioned three-layer structures.

The RFID identifier may be an access control device, such as a ticket for public transport, a passport or an identity card. In other words, the access control device is any device that allows a user to access after the user's identity and/or the user's right to access have been checked. However, also other uses are possible.

Usually the RFID identifier works at a frequency range of 3 to 30 MHz. A nominal frequency may be 13.56 MHz, i.e. the frequency at which the RFID identifier is expected to work is 13.56 MHz.

The RFID identifier comprises a substrate. The substrate has a first surface and a second surface. The substrate may be a sheet-like material. The substrate may have a fibrous portion that consists of non-plastic biodegradable fibers. The fibrous portion is the only fibrous portion of the substrate, i.e. the substrate does not comprise any other fibrous portion. Usually the non-plastic biodegradable fibers are originated from wooden fibers. The fibrous portion may comprise mechanical and/or chemical pulp. The fibrous portion may comprise deinked pulp. Further, the substrate may be of wood or veneer.

The fibrous portion may also comprise regenerated cellulose fibers. However, the fibrous portion may comprise fibers that are not originated from wooden fibers, such as fibers obtained from plants different from trees.

In addition to the fibrous portion the substrate may comprise at least one filler. The filler may be, for example, kaolin, talc, or any other mineral additive.

The surface of the substrate may be coated or sized.

The substrate may be a supercalendered paper (SC) that comprises at least one filler and its fibrous portion comprises mainly mechanical pulp. Supercalendered paper is uncoated paper having a smooth and glossy surface.

Due to the non-plastic biodegradable fibers the substrate decomposes, i.e. its is compostable. The remaining mineral materials, which may exist in the substrate, are harmless.

In addition to the fiber-based materials, the substrate may be made of at least one biodegradable bioplastic, or the substrate may comprise at least one biodegradable bioplastic. The substrate made of at least one biodegradable bioplastic may be extruded.

The bioplastics are plastics derived from renewable feedstocks, i.e. they are not petroleum-based. The biodegradable bioplastics include, among others, bioplastics derived from corn, sugarcane, or cellulose. The substrate that is made of biodegradable bioplastics decomposes, i.e. it is compostable.

The substrate has a coil antenna on its first surface. The coil antenna may have been formed by additive or subtractive manufacturing methods. The manufacturing methods comprise etching, screen or flexographic printing, printing by electrically conductive ink, die cutting or laser cutting from an electrically conductive foil and thermal transfer printing. The electrically conductive antenna is first printed on a ribbon and then transferred to the substrate in the thermal transfer printing. The coil antenna may be of aluminium, copper, silver, or conductive polymer. The coil antenna may comprise nanosize particles. It is possible that the coil antenna comprises graphene. The preferred material of the coil antenna is aluminium.

The coil antenna has a first end and a second end. The first end and the second end are connected by a bridge. The bridge has a first end and a second end. The first end of the coil antenna is coupled to the first end of the bridge and the second end of the coil antenna is coupled to the second end of the bridge. At least either of the first end of the coil antenna or the second end of the coil antenna is capacitively coupled to the corresponding end of the bridge, i.e. either the first end of the antenna is capacitively coupled to the first end of the bridge, or the second end of the antenna is capacitively coupled to the second end of the bridge. It is possible that the both ends of the coil antenna are capacitively coupled to the corresponding ends of the bridges, i.e. the first end of the antenna is capacitively coupled to the first end of the bridge and the second end of the antenna is capacitively coupled to the second end of the bridge. The capacitive coupling is made by electrically conductive plates and a dielectric layer between the plates. The dielectric layer is an electrical insulator that can be polarized by an applied electric field.

An integrated circuit on a chip coupled to the coil antenna. The chip may be located anywhere on the coil. It may also be located on the bridge provided that it can be coupled to the antenna. The integrated circuit comprises information that is necessary to give the required identification, e.g. access to the public transportation on the basis of a paid fee, or access to a certain building on the basis of the user's identity, or prove the person's identity. The integrated circuit on the chip and the coil antenna form an RFID tag that is readable by a RFID reader. The RFID tag may be passive, i.e. it does not have its own internal power system.

The RFID identifiers are usually manufactured by a roll-to-roll process. The outer surfaces of the RFID identifier may be printed. The outer surfaces may be printed in a printer-encoder.

According the first alternative the RFID identifier comprises the coil antenna on the first side of the substrate. The first end of the coil antenna comprises a first antenna plate and the second end of the coil antenna comprises a second antenna plate. The first end of the bridge comprises a first bridge plate and the second end of the bridge comprises a second bridge plate. There is an intermediate electrically conductive part between the first bridge plate and the second bridge plate, i.e. the first bridge plate, the intermediate part and the second bridge plate form a continuous electrically conductive pattern. The plates are connected in such a manner that the first antenna plate is capacitively connected to the first bridge plate and the second antenna plate is capacitively connected to the second bridge plate. The bridge plates face towards the antenna plates. The capacitive connection necessitates that there is a dielectric layer between the antenna plates and the bridge plates. The dielectric layer may be formed of pressure sensitive adhesive, or hot melt adhesive. The thickness of the dielectric layer may be between 10 and 60 µm, preferably it is between 25 and 50 µm.

The bridge may be on an auxiliary substrate. The auxiliary substrate may be made of the same material as the substrate. The bridge may be without the auxiliary substrate, i.e. it may comprise e.g. aluminium foil that is attached to the substrate as such.

An RFID identifier according to the first alternative may be claimed as comprising
a substrate having a first surface and a second surface;
the substrate comprises biodegradable material;
a coil antenna on the first surface of the substrate and an integrated circuit on a chip coupled to the coil antenna;
the coil antenna having a first end of the coil antenna and a second end of the coil antenna;
the first end and the second end of the coil antenna are connected by a bridge, the bridge having a first end of the bridge and a second end of the bridge;
the first end of the coil antenna comprises a first antenna plate and the second end of the coil antenna comprises a second antenna plate;
the first end of the bridge comprises a first bridge plate and the second end of the bridge comprises a second bridge plate;
the first antenna plate is capacitively connected to the first bridge plate and the second antenna plate is capacitively connected to the second bridge plate;
the coil antenna and the bridge are electrically isolated between the first end and the second end of the bridge.

According to the second alternative the RFID identifier comprises the coil antenna on the first side of the substrate. The first end of the coil antenna comprises a first antenna plate and the second end of the coil antenna comprises a second antenna plate. The bridge is on the second side of the substrate. The first end of the bridge comprises a first bridge plate and the second end of the bridge comprises a second bridge plate. There is an intermediate electrically conductive part between the first bridge plate and the second bridge plate, i.e. the first bridge plate, the intermediate part and the second bridge plate form a continuous electrically conductive pattern. The plates are connected in such a manner that the first antenna plate is capacitively connected to the first bridge plate and the second antenna plate is capacitively connected to the second bridge plate. The bridge plates face towards the antenna plates. The substrate forms a dielectric layer between the antenna plates and the bridge plates. The thickness of the dielectric layer, i.e. the substrate, may be between 10 and 60 µm, preferably it is between 25 and 50 µm.

The RFID identifier according to the second alternative may be claimed comprising
a substrate having a first surface and a second surface;
the substrate comprises biodegradable material;
a coil antenna on the first surface of the substrate and an integrated circuit on a chip coupled to the coil antenna;
the coil antenna having a first end of the coil antenna and a second end of the coil antenna;
the first end and the second end of the coil antenna are connected by a bridge on the second side of the substrate, the bridge having a first end of the bridge and a second end of the bridge;
the first end of the coil antenna comprises a first antenna plate and the second end of the coil antenna comprises a second antenna plate;
the first end of the bridge comprises a first bridge plate and the second end of the bridge comprises a second bridge plate;
the plates are connected in such a manner that the first antenna plate is capacitively connected to the first bridge plate and the second antenna plate is capacitively connected to the second bridge plate;
the coil antenna and the bridge are electrically isolated between the first end and the second end of the bridge.

According to the third alternative the coil antenna and the bridge are on the first side of the substrate. The first end of the coil antenna is conductively connected to the first end of the bridge. There is an intermediate electrically conductive part between the first end of the bridge and the second bridge plate, i.e. the bridge form a continuous electrically conductive pattern from the first end of the bridge to the second bridge plate. The second end of the coil antenna comprises a second antenna plate and the second end of the bridge comprises a second bridge plate. The substrate has a fold in such a manner that the electrically conductive second plate and the second bridge plate are capacitively connected. The second bridge plate faces towards the second antenna plate. The capacitive connection necessitates that there is a dielectric layer between the second antenna plate and the second bridge plate. The dielectric layer may be formed of pressure sensitive adhesive, or hot melt adhesive. The thickness of the dielectric layer may be between 10 and 60 µm, preferably it is between 25 and 50 µm.

The RFID identifier according to the third alternative may be claimed as comprising
a substrate having a first surface and a second surface;
the substrate comprises biodegradable material;
a coil antenna on the first surface of the substrate and an integrated circuit on a chip coupled to the coil antenna;
the coil antenna having a first end of the coil antenna and a second end of the coil antenna;
the first end and the second end of the coil antenna are connected by a bridge that is situated on the first surface of the substrate, the bridge having a first end of the bridge and a second end of the bridge;
the first end of the coil antenna is conductively connected to the first end of the bridge;
the second end of the coil antenna comprises a second antenna plate and the second end of the bridge comprises a second bridge plate;
the substrate has a fold in such a manner that the electrically conductive second plate and the second bridge plate are capacitively connected;
the coil antenna and the bridge are electrically isolated between the first and the second end of the bridge.

### BRIEF DESCRIPTION OF THE DRAWINGS

In the following the invention will be described in greater detail by means of preferred embodiments with reference to the attached drawings, in which
Figure 1 shows a front view of a typical RFID inlay according to the prior art;
Figure 2a shows a front view of elements of an RFID identifier;
Figure 2b shows a front view of the RFID identifier whose elements are shown in Fig. 2a;
Figure 2c shows a cross-sectional view A-A of Fig. 2b;
Figure 3a shows a front view of a web comprising RFID identifiers;
Figure 3b shows a cross-sectional view A-A of Fig. 3a;
Figure 4a shows a front view of elements of an RFID identifier;
Figure 4b shows a front view of the RFID identifier whose elements are shown in Fig. 4a;
Figure 4c shows a cross-sectional view A-A of Fig. 4b.

### DETAILED DESCRIPTION OF THE INVENTION

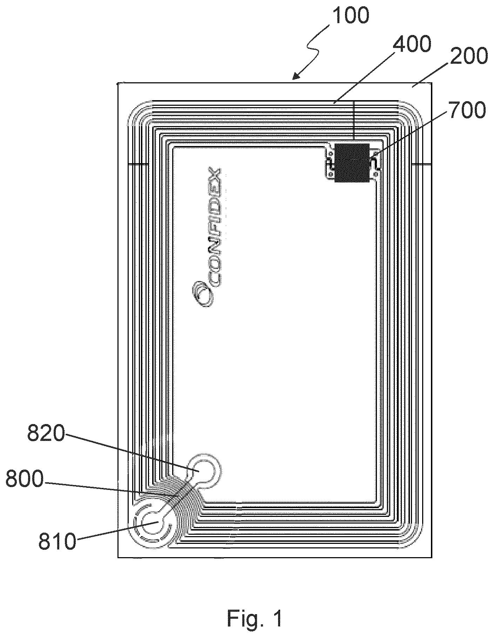

Figure 1 shows a typical RFID inlay 100 according to the prior art. The inlay 100 comprises a coil antenna 400 and an integrated circuit on a chip 700 on a surface of a substrate 200. The ends of the coil antenna 400 are electrically connected by a bridge 800 that has a first end 810 and a second end 820. Both ends of the bridge have a crimp connection. The bridge 800 is electrically isolated from the coil antenna 400 between the first end 810 and the second end 820.

Usually the inlay is between two paper sheets, thus forming an RFID identifier.

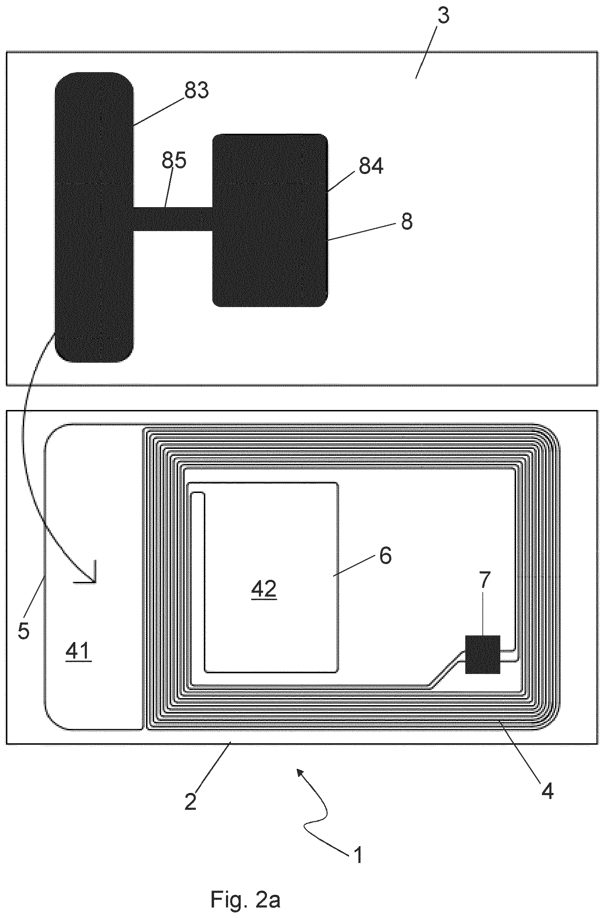

Figure 2a shows elements of an RFID identifier 1. There is a substrate 2. A coil antenna 4 is on a surface of the substrate 2. The coil antenna 4 has two ends, a first end and a second end. The first end of the coil antenna 4 comprises a first antenna plate 41 which is demarcated by a line 5. The second end of the coil antenna 4 comprises a second antenna plate 42 which is demarcated by a line 6. An integrated circuit on a chip 7 is coupled to the coil antenna 4.

There is a bridge 8 on an auxiliary substrate 3. However, it is also possible that the bridge 8 exists without the auxiliary substrate 3. The bridge 8 comprises a first bridge plate 83, a second bridge plate 84 and an intermediate part 85 between the plates 83, 84.

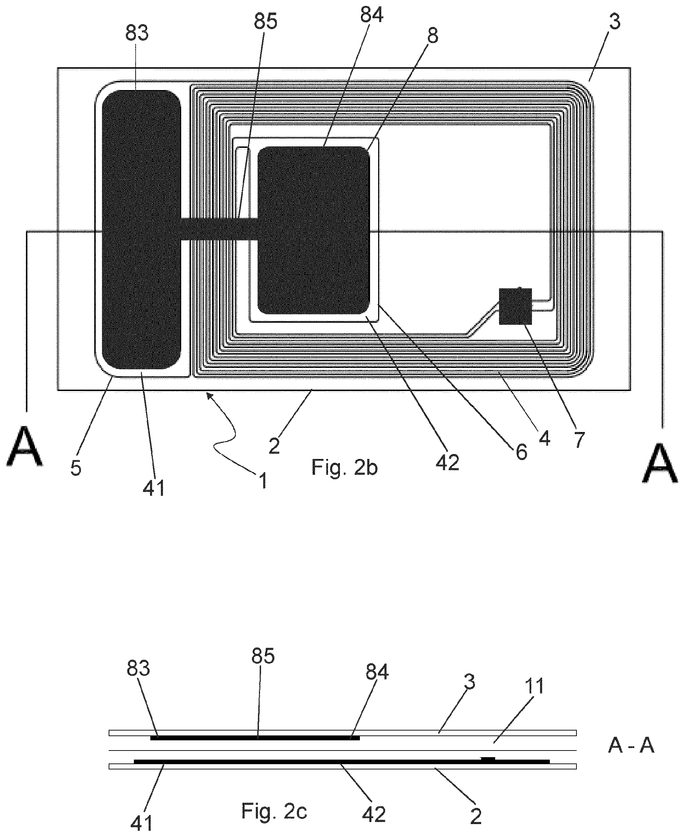

Figure 2b shows the RFID identifier 1 when the auxiliary substrate 3 is attached to the substrate 2. The first bridge plate 83 is attached to the first antenna plate 41. The second bridge plate 84 is attached to the second antenna plate 42. The substrate 2 and the auxiliary substrate 3 are bonded by a dielectric layer. The dielectric layer may be a dielectric adhesive, such a dielectric hot melt adhesive or a dielectric pressure sensitive adhesive. The dielectric layer forms an electrically nonconductive layer between the coil antenna 4 comprising the plates 41, 42 and the bridge comprising the plates 83, 84.

The substrate 2 and the auxiliary substrate 3 seal the antenna 4 and the chip 7 between them. Thus, a two-layer structure is formed.

Figure 2c shows a cross sectional view A-A of Fig. 2b. There is a dielectric layer 11 between the substrate 2 and the auxiliary substrate 3. Figures 2a to 2c show the RFID identifier according to the first alternative.

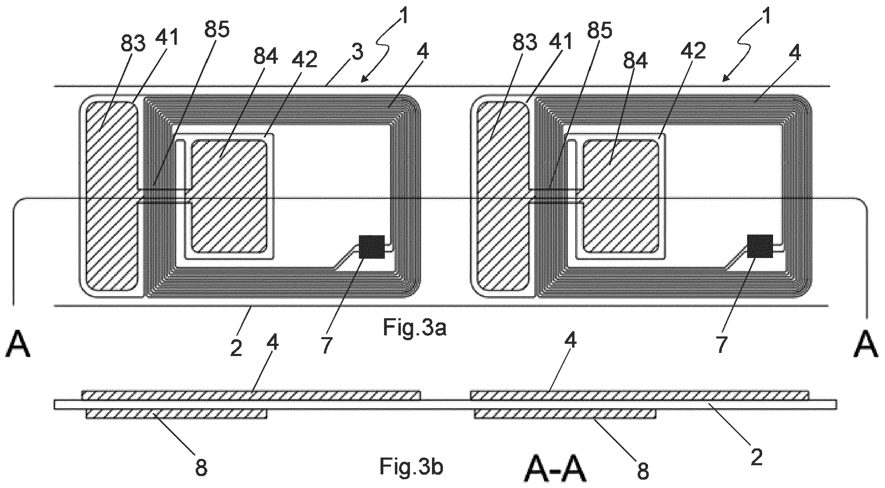

Figure 3a shows sequential RFID identifiers 1 formed on a single substrate 2. The RFID identifier 1 comprises a coil antenna 4 and an integrated circuit on a chip 7 coupled to the coil antenna 4 on the first side of the substrate 2. The RFID identifier 1 comprises a bridge 8 on the second side of the substrate 2. The RFID identifier 1 may have an excess material layer on both sides of the substrate 2. The excess material layer may comprise non-plastic biodegradable fibrous material, for example.

Figure 3b shows a rough cross sectional view A-A of Fig. 3a. Figures 3a and 3b show the RFID identifier according to the second alternative.

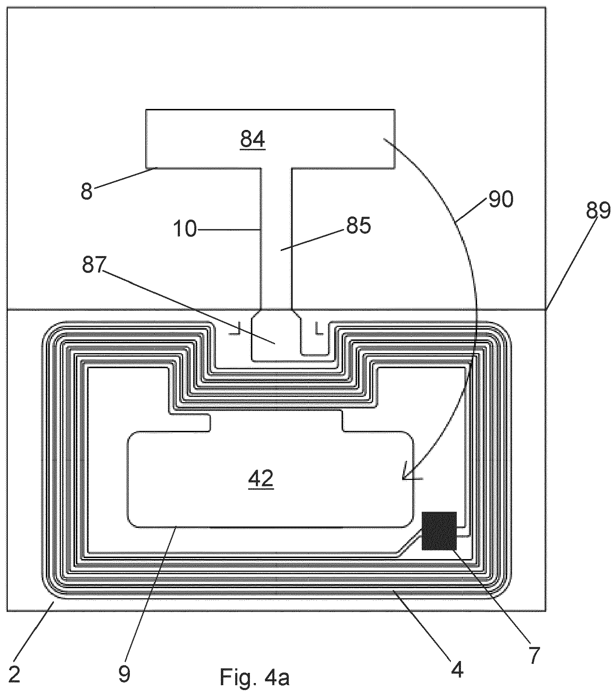

Figure 4a shows an RFID identifier 1 formed on a single substrate 2. The RFID identifier 1 comprises a coil antenna 4, an integrated circuit on a chip 7 and a bridge 8. The coil antenna 4 comprises a first end and a second end. The second end of the coil antenna comprises a second antenna plate 42 which is demarcated by a line 9.

The bridge 8 also comprises a first end and a second end. The bridge 8 is demarcated by a line 10. The first end of the coil antenna 4 is conductively connected to the first end of the bridge 8 at a junction 87. The second end of the bridge 8 comprises a second bridge plate 84. When a dielectric material is applied on the substrate 2 and the substrate 2 is fold along line 89 as arrow 90 shows the second antenna plate 42 and the second bridge plate 84 become capacitively connected.

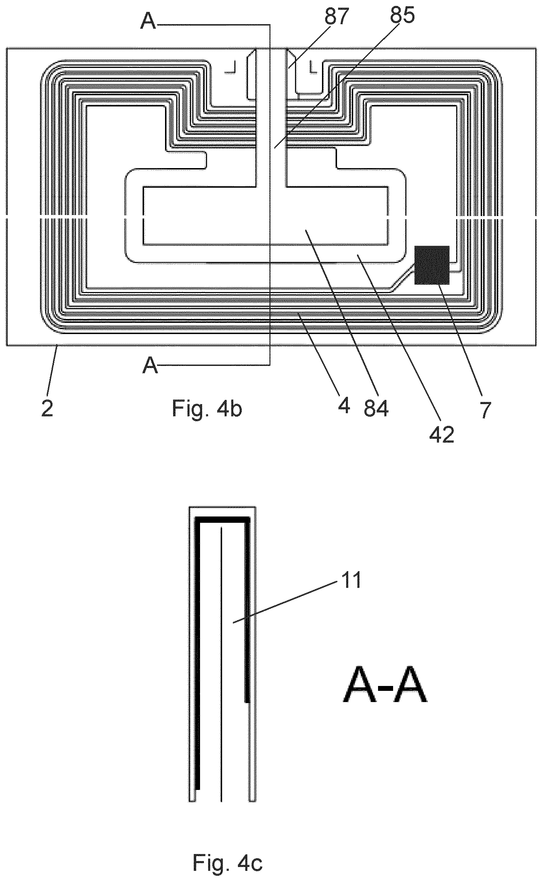

Figure 4b shows the RFID identifier 1 of Fig. 4a as folded. The second bridge plate 84 lies upon the second antenna plate 42. There is a dielectric layer between the folded sides of the substrate that form the required dielectric layer also between the second bridge plate 84 and the second antenna plate 42. The dielectric layer may be e.g. a dielectric pressure sensitive adhesive, or a dielectric hot melt adhesive.

Fig. 4c shows the RFID identifier of Figs. 4a and 4b as a cross-sectional view. Between the sides of the substrate there is a dielectric layer 11.

The folded substrate 2 seals the antenna 4 and the chip 7 inside two sides of the substrate. Thus, a two-layer structure is formed.

Figures 4a to 4c show the RFID identifier 1 according to the third alternative.

It will be obvious to a person skilled in the art that, as the technology advances, the inventive concept can be implemented in various ways. The invention and its embodiments are not limited to the examples described above but may vary within the scope of the claims.

## Claims

1. An RFID identifier (1) comprising a substrate (2) having a first surface and a second surface, a coil antenna (4) on the first surface of the substrate (2) and an integrated circuit on a chip (7) coupled to the coil antenna (4), the coil antenna (4) having a first end of the coil antenna and a second end of the coil antenna, the first end and the second end of the coil antenna (4) are connected by a bridge (8), the bridge (8) having a first end of the bridge and a second end of the bridge, the first end of the coil antenna is coupled to the first end of the bridge and the second end of the coil antenna is coupled to the second end of the bridge, the coil antenna (4) and the bridge (8) being electrically isolated between the first and the second end of the bridge, **characterized in that** the substrate (2) comprises biodegradable material and at least either of the first end of the coil antenna or the second end of the coil antenna is capacitively coupled to the corresponding end of the bridge.

2. The RFID identifier according to claim 1, **characterized in that** the coil antenna (4) is on the first surface of the substrate (2), the first end of the coil antenna comprises a first antenna plate (41) and the second end of the coil antenna comprises a second antenna plate (42), the first end of the bridge comprises a first bridge plate (83) and the second end of the bridge comprises a second bridge plate (84), the first and second antenna plates (41, 42) and the first and second bridge plates (83, 84) are connected in such a manner that the first antenna plate (41) is capacitively connected to the first bridge plate (83) and the second antenna plate (42) is capacitively connected to the second bridge plate (84).

3. The RFID identifier according to claim 1, **characterized in that** the coil antenna (4) and the bridge (8) are on the first surface of the substrate (2), the first end of the coil antenna (4) is conductively connected to the first end of the bridge (8), the second end of the coil antenna (4) comprises a second antenna plate (42) and the second end of the bridge (8) comprises a second bridge plate (84), the substrate (2) has a fold (89) in such a manner that the electrically conductive second plate (42) and the second bridge plate (84) are capacitively connected.

4. The RFID identifier according to claim 2 or 3, **characterized in that** there is a dielectric adhesive layer between the first and second antenna plates (41, 42) and the first and second bridge plates (83, 84).

5. The RFID identifier according to claim 4, **characterized in that** the thickness of the dielectric adhesive layer is from 10 to 60 µm.

6. The RFID identifier according to claim 1, **characterized in that** the coil antenna (4) is on the first surface of the substrate (2), the first end of the coil antenna (4) comprises a first antenna plate (41) and the second end of the coil antenna (4) comprises a second antenna plate (42), the bridge (8) is on the second surface of the substrate (2), the first end of the bridge (8) comprises a first bridge plate (83) and the second end of the bridge (8) comprises a second bridge plate (84), the first and second antenna plates (41, 42) and the first and second bridge plates (83, 84) are connected in such a manner that the first antenna plate (41) is capacitively connected to the first bridge plate (83) and the second antenna plate (42) is capacitively connected to the second bridge plate (84).

7. The RFID identifier according to claim 6, **characterized in that** a dielectric layer between the first and second antenna plates (41, 42) and the first and second bridge plates (83, 84) comprises the substrate (2).

8. The RFID identifier according to claim 7, **characterized in that** the thickness of the substrate (2) is from 10 to 60µm.

9. The RFID identifier according to any preceding claim, **characterized in that** the RFID identifier (1) is configured to operate at a frequency range of 3 to 30 MHz.

10. The RFID identifier according to any preceding claim, **characterized in that** the RFID identifier (1) is configured to operate at a nominal frequency of 13.56 MHz.

11. The RFID identifier according to any preceding claim, **characterized in that** the substrate (2) comprises a fibrous portion that consists of non-plastic biodegradable fibers.

12. The RFID identifier according to claim 11, **characterized in that** the fibrous portion of the substrate (2) consists of mechanical and/or chemical pulp.

13. The RFID identifier according to claim 11 or 12, **characterized in that** the substrate (2) is made of paper or cardboard.

14. The RFID identifier according to any preceding claim 1 to 10, **characterized in that** the substrate (2) is made of wood or veneer.

15. The RFID identifier according to any preceding claim 1 to 10, **characterized in that** the substrate (2) comprises at least one biodegradable bioplastic.

16. The RFID identifier according to any preceding claim, **characterized in that** the RFID identifier (1) is a ticket for public transport.

## Patentansprüche

1. RFID-Kennung (1), die ein Substrat (2), das eine erste Fläche und eine zweite Fläche aufweist, eine Spulenantenne (4) auf der ersten Fläche des Substrats (2) und eine integrierte Schaltung auf einem Chip (7), die an die Spulenantenne (4) gekoppelt ist, umfasst, wobei die Spulenantenne (4) ein erstes Ende der Spulenantenne und ein zweites Ende der Spulenantenne aufweist, wobei das erste Ende und das zweite Ende der Spulenantenne (4) durch eine Brücke (8) verbunden sind, wobei die Brücke (8) ein erstes Ende der Brücke und ein zweites Ende der Brücke aufweist, wobei das erste Ende der Spulenantenne an das erste Ende der Brücke gekoppelt ist und das zweite Ende der Spulenantenne an das zweite Ende der Brücke gekoppelt ist, wobei die Spulenantenne (4) und die Brücke (8) zwischen dem ersten und dem zweiten Ende der Brücke elektrisch isoliert sind, **dadurch gekennzeichnet, dass** das Substrat (2) ein biologisch abbaubares Material umfasst und mindestens entweder das erste Ende der Spulenantenne oder das zweite Ende der Spulenantenne kapazitiv an das entsprechende Ende der Brücke gekoppelt ist.

2. RFID-Kennung nach Anspruch 1, **dadurch gekennzeichnet, dass** sich die Spulenantenne (4) auf der ersten Fläche des Substrats (2) befindet, das erste Ende der Spulenantenne eine erste Antennenplatte (41) umfasst und das zweite Ende der Spulenantenne eine zweite Antennenplatte (42) umfasst, das erste Ende der Brücke eine erste Brückenplatte (83) umfasst und das zweite Ende der Brücke eine zweite Brückenplatte (84) umfasst, die erste und die zweite Antennenplatte (41, 42) und die erste und die zweite Brückenplatte (83, 84) in einer Weise verbunden sind, dass die erste Antennenplatte (41) kapazitiv mit der ersten Brückenplatte (83) verbunden ist und die zweite Antennenplatte (42) kapazitiv mit der zweiten Brückenplatte (84) verbunden ist.

3. RFID-Kennung nach Anspruch 1, **dadurch gekennzeichnet, dass** sich die Spulenantenne (4) und die Brücke (8) auf der ersten Fläche des Substrats (2) befinden, das erste Ende der Spulenantenne (4) konduktiv mit dem ersten Ende der Brücke (8) verbunden ist, das zweite Ende der Spulenantenne (4) eine zweite Antennenplatte (42) umfasst und das zweite Ende der Brücke (8) eine zweite Brückenplatte (84) umfasst, das Substrat (2) eine Faltung (89) in einer Weise aufweist, dass die elektrisch leitfähige zweite Platte (42) und die zweite Brückenplatte (84) kapazitiv verbunden sind.

4. RFID-Kennung nach Anspruch 2 oder 3, **dadurch gekennzeichnet, dass** sich zwischen der ersten und der zweiten Antennenplatte (41, 42) und der ersten und der zweiten Brückenplatte (83, 84) eine dielektrische Klebeschicht befindet.

5. RFID-Kennung nach Anspruch 4, **dadurch gekennzeichnet, dass** die Dicke der dielektrischen Klebeschicht von 10 bis 60 µm liegt.

6. RFID-Kennung nach Anspruch 1, **dadurch gekennzeichnet, dass** sich die Spulenantenne (4) auf der ersten Fläche des Substrats (2) befindet, das erste Ende der Spulenantenne (4) eine erste Antennenplatte (41) umfasst und das zweite Ende der Spulenantenne (4) eine zweite Antennenplatte (42) umfasst, die Brücke (8) sich auf der zweiten Fläche des Substrats (2) befindet, das erste Ende der Brücke (8) eine erste Brückenplatte (83) umfasst und das zweite Ende der Brücke (8) eine zweite Brückenplatte (84) umfasst, die erste und die zweite Antennenplatte (41, 42) und die erste und die zweite Brückenplatte (83, 84) in einer Weise verbunden sind, dass die erste Antennenplatte (41) kapazitiv mit der ersten Brückenplatte (83) verbunden ist und die zweite Antennenplatte (42) kapazitiv mit der zweiten Brückenplatte (84) verbunden ist.

7. RFID-Kennung nach Anspruch 6, **dadurch gekennzeichnet, dass** eine dielektrische Schicht zwischen der ersten und der zweiten Antennenplatte (41, 42) und der ersten und der zweiten Brückenplatte (83, 84) das Substrat (2) umfasst.

8. RFID-Kennung nach Anspruch 7, **dadurch gekennzeichnet, dass** die Dicke des Substrats (2) von 10 bis 60 µm liegt.

9. RFID-Kennung nach einem der vorhergehenden Ansprüche, **dadurch gekennzeichnet, dass** die RFID-Kennung (1) dazu ausgelegt ist, in einem Frequenzbereich von 3 bis 30 MHz betrieben zu werden.

10. RFID-Kennung nach einem der vorhergehenden Ansprüche, **dadurch gekennzeichnet, dass** die RFID-Kennung (1) dazu ausgelegt ist, bei einer Nennfrequenz von 13,56 MHz betrieben zu werden.

11. RFID-Kennung nach einem der vorhergehenden Ansprüche, **dadurch gekennzeichnet, dass** das Substrat (2) einen Faserabschnitt umfasst, der aus biologisch abbaubaren Fasern besteht, die keinen Kunststoff enthalten.

12. RFID-Kennung nach Anspruch 11, **dadurch gekennzeichnet, dass** der Faserabschnitt des Substrats (2) aus einem mechanischen und/oder chemischen Zellstoff besteht.

13. RFID-Kennung nach Anspruch 11 oder 12, **dadurch gekennzeichnet, dass** das Substrat (2) aus Papier oder Pappe besteht.

14. RFID-Kennung nach einem der vorhergehenden Ansprüche 1 bis 10, **dadurch gekennzeichnet, dass** das Substrat (2) aus Holz oder Furnier besteht.

15. RFID-Kennung nach einem der vorhergehenden Ansprüche 1 bis 10, **dadurch gekennzeichnet, dass** das Substrat (2) mindestens einen biologisch abbaubaren Biokunststoff umfasst.

16. RFID-Kennung nach einem der vorhergehenden Ansprüche, **dadurch gekennzeichnet, dass** die RFID-Kennung (1) ein Ticket für den öffentlichen Verkehr ist.

## Revendications

1. Identifiant RFID (1) comprenant un substrat (2) ayant une première surface et une deuxième surface, une antenne à cadre (4) sur la première surface du substrat (2) et un circuit intégré sur une puce (7) couplée à l'antenne à cadre (4), l'antenne à cadre (4) ayant une première extrémité de l'antenne à cadre et une deuxième extrémité de l'antenne à cadre, la première extrémité et la deuxième extrémité de l'antenne à cadre (4) sont connectées par un pont (8), le pont (8) ayant une première extrémité du pont et une deuxième extrémité du pont, la première extrémité de l'antenne à cadre est couplée à la première extrémité du pont, et la deuxième extrémité de l'antenne à cadre est couplée à la deuxième extrémité du pont, l'antenne à cadre (4) et le pont (8) étant isolés électriquement entre la première et la deuxième extrémité du pont, **caractérisé en ce que** le substrat (2) comprend matériau biodégradable, et au moins soit la première extrémité de l'antenne à cadre soit la deuxième extrémité de l'antenne à cadre est couplée de manière capacitive à l'extrémité correspondante du pont.

2. Identifiant RFID selon la revendication 1, **caractérisé en ce que** l'antenne à cadre (4) se trouve sur la première surface du substrat (2), la première extrémité de l'antenne à cadre comprend une première plaque d'antenne (41), et la deuxième extrémité de l'antenne à cadre comprend une deuxième plaque d'antenne (42), la première extrémité du pont comprend une première plaque de pont (83) et la deuxième extrémité du pont comprend une deuxième plaque de pont (84), les première et deuxième plaques d'antenne (41, 42) et les première et deuxième plaques de pont (83, 84) sont connectées de sorte que la première plaque d'antenne (41) soit connectée de manière capacitive à la première plaque de pont (83) et que la deuxième plaque d'antenne (42) soit connectée de manière capacitive à la deuxième plaque de pont (84).

3. Identifiant RFID selon la revendication 1, **caractérisé en ce que** l'antenne à cadre (4) et le pont (8) se trouvent sur la première surface du substrat (2), la première extrémité de l'antenne à cadre (4) est connectée de manière conductrice à la première extrémité du pont (8), la deuxième extrémité de l'antenne à cadre (4) comprend une deuxième plaque d'antenne (42), et la deuxième extrémité du pont (8) comprend une deuxième plaque de pont (84), le substrat (2) présente un pli (89) de sorte que la deuxième plaque électriquement conductrice (42) et la deuxième plaque de pont (84) soient connectées de manière capacitive.

4. Identifiant RFID selon la revendication 2 ou 3, **caractérisé en ce qu'**il existe une couche adhésive diélectrique entre les première et deuxième plaques d'antenne (41, 42) et les première et deuxième plaques de pont (83, 84).

5. Identifiant RFID selon la revendication 4, **caractérisé en ce que** l'épaisseur de la couche adhésive diélectrique varie de 10 à 60 µm.

6. Identifiant RFID selon la revendication 1, **caractérisé en ce que** l'antenne à cadre (4) se trouve sur la première surface du substrat (2), la première extrémité de l'antenne à cadre (4) comprend une première plaque d'antenne (41) et la deuxième extrémité de l'antenne à cadre (4) comprend une deuxième plaque d'antenne (42), le pont (8) se trouve sur la deuxième surface du substrat (2), la première extrémité du pont (8) comprend une première plaque de pont (83) et la deuxième extrémité du pont (8) comprend une deuxième plaque de pont (84), les première et deuxième plaques d'antenne (41, 42) et les première et deuxième plaques de pont (83, 84) sont connectées de sorte que la première plaque d'antenne (41) soit connectée de manière capacitive à la première plaque de pont (83) et la deuxième plaque d'antenne (42) est connectée de manière capacitive à la deuxième plaque de pont (84).

7. Identifiant RFID selon la revendication 6, **caractérisé en ce qu'**une couche diélectrique entre les première et deuxième plaques d'antenne (41, 42) et les première et deuxième plaques de pont (83, 84) comprend le substrat (2).

8. Identifiant RFID selon la revendication 7, **caractérisé en ce que** l'épaisseur du substrat (2) varie de 10 à 60 µm.

9. Identifiant RFID selon l'une des revendications précédentes, **caractérisé en ce que** l'identifiant RFID (1) est configuré pour fonctionner dans une gamme de fréquences allant de 3 à 30 MHz.

10. Identifiant RFID selon l'une des revendications précédentes, **caractérisé en ce que** l'identifiant RFID (1) est configuré pour fonctionner à une fréquence nominale de 13,56 MHz.

11. Identifiant RFID selon l'une des revendications précédentes, **caractérisé en ce que** le substrat (2) comprend une partie fibreuse qui est constituée de fibres biodégradables non plastiques.

12. Identifiant RFID selon la revendication 11, **caractérisé en ce que** la partie fibreuse du substrat (2) est constituée de pâte mécanique et/ou chimique.

13. Identifiant RFID selon la revendication 11 ou 12, **caractérisé en ce que** le substrat (2) est réalisé en papier ou en carton.

14. Identifiant RFID selon l'une des revendications précédentes 1 à 10, **caractérisé en ce que** le substrat (2) est réalisé en bois ou en placage.

15. Identifiant RFID selon l'une des revendications précédentes 1 à 10, **caractérisé en ce que** le substrat (2) comprend au moins un bioplastique biodégradable.

16. Identifiant RFID selon l'une des revendications précédentes, **caractérisé en ce que** l'identifiant RFID (1) est un titre de transport public.
